# EUROPÄISCHE PATENTSCHRIFT

(11) **EP 2 086 816 B1**
(45) Veröffentlichungstag und Bekanntmachung des Hinweises auf die Patenterteilung: **12.01.2011**
(21) Anmeldenummer: 07816183.3
(22) Anmeldetag: 09.10.2007
(51) Int. Cl.: B62D 5/00, F16H 1/32

(54) **DREHZAHLÜBERLAGERUNGSEINRICHTUNG MIT HILFSANTRIEB**
DEVICE FOR SUPERIMPOSING ROTATIONAL SPEED WITH AUXILIARY DRIVE
DISPOSITIF DE SUPERPOSITION DE VITESSES DOTE D'UN ENTRAINEMENT AUXILIAIRE

(30) Priorität: 27.10.2006 CH 17162006
(43) Veröffentlichungstag der Anmeldung: 12.08.2009
(73) Patentinhaber: ThyssenKrupp Presta Aktiengesellschaft, 9492 Eschen (LI)
(72) Erfinder: STROBEL, Joseph Léon, 9493 Mauren (LI)
(74) Vertreter: Wegmann, Urs
(86) Internationale Anmeldenummer: PCT/CH2007/000500
(87) Internationale Veröffentlichungsnummer: WO 2008/049248

(56) Entgegenhaltungen:
- DE-A1- 19 809 199
- DE-B1- 2 516 474
- DE-B3-102004 052 562
- US-A- 4 041 808

## Beschreibung

Die Erfindung betrifft eine Drehzahlüberlagerungseinrichtung nach dem Oberbegriff des Patentanspruches 1.

Die Erfindung betrifft insbesonders eine Drehzahlüberlagerungseinrichtung mit Hilfsantrieb für ein Lenksystem für nicht spurgebundene Kraftfahrzeuge die, die Drehzahlen des Hilfsantriebes und der Steuereingriffe am Steuerrad durch den Fahrer überlagert und auf die Lenkbewegung der Räder überträgt.

Derartige Drehzahlüberlagerungseinrichtungen werden im Stand der Technik, soweit sie für Lenkungssysteme angewendet werden, auch als Drehwinkelüberlagerungseinrichtungen bezeichnet. Drehzahlüberlagerung bzw. Drehwinkelüberlagerung sind Synonyme.

Im Stand der Technik sind eine Reihe derartiger Systeme bekannt, wobei das Drehzahlüberlagerungsgetriebe durch ein Planetengetriebe oder auch durch ein Schneckenradgetriebe realisiert wird.

So ist in der DE19823721A1 eine derartige Drehzahlüberlagerungseinrichtung vorgestellt. Hier wird durch ein Steuerrad ein Gehäuse angetrieben, in dem sich Verzahnungen eines Hohlrades zweier Planetengetriebe befinden. Ein in dem Gehäuse angeordneter Elektromotor treibt das Sonnenrad des ersten Planetengetriebes an. Der Planetenträger des ersten Planetengetriebes treibt das Sonnenrad des zweiten Planetengetriebes an. Die Planeten des zweiten Planetengetriebes stützen sich am Hohlrad des Gehäuses ab und der Planetenträger ist mit der Ausgangswelle verbunden. In der gezeigten Ausführungsform ist der Antrieb des Sonnenrades des ersten Planetengetriebes direkt durch den Rotor des Elektromotors realisiert. Durch eine entsprechende Ansteuerung des Elektromotors können die gewünschten Drehzahlüberlagerungen dargestellt werden. Diese im Stand der Technik gezeigte Lösung besitzt aber einige entscheidende Nachteile. Derartige Getriebe bestehen aus einer Vielzahl von Bauteilen. Es werden zwei Hohlzahnradkränze bzw. Planetengetriebe benötigt. Die Herstellung der Einzelteile ist sehr aufwändig und teuer. Die Vielzahl der Zahneingriffe führt zu sehr hohen Genauigkeitsanforderungen, um Spiele zu vermeiden. Weiter muss die gesamte Einrichtung , inklusive Motorgehäuse, vom Fahrer beim Steuern mit gedreht werden. Ein weiterer Nachteil besteht zudem in der aufwendigen Einkopplung der elektrischen Energie für den Elektromotor.

In einem weiteren Stand der Technik, der DE19852447A1, wird eine Lösung zur Drehzahlüberlagerung vorgestellt, bei der ein Elektromotor über einen Schneckenantrieb an das, als Planetengetriebe ausgebildete, Überlagerungsgetriebe angekoppelt ist. Hier ist die Getriebeeinheit karosseriefest angeordnet. Allerdings sind auch mit dieser Lösung eine Reihe von Nachteilen verbunden. Die Einrichtung benötigt viele Einzelteile, deren Herstellung aufwändig und teuer und die Anforderungen an die Herstelltoleranzen entsprechend hoch.

In der WO 2006/072186 A1 wird eine Drehzahlüberlagerungseinrichtung vorgestellt welche bereits recht kompakt ist und weniger Bauteile aufweist. Das Überlagerungsgetriebe besteht aus einer Zahnscheibe, die mit einer mit dem Steuerrad gekoppelten Antriebswelle verbunden ist und einer weiteren Zahnscheibe, die mit der Abtriebswelle verbunden ist wobei die beiden Zahnscheiben eine unterschiedliche Zähnezahl aufweisen und ein weiteres Zahnrad in beide Verzahnungen eingreift, welches an einem Rotor in sich um eine eigene Achse drehbar exzentrisch angeordnet ist, wobei der Rotor um die Wellenlängsachse von einem Hilfsantrieb angetrieben wird. Durch die Wahl der unterschiedlichen Zähnezahl kann das Übersetzungsverhältnis eingestellt werden.

Nachteil der vorgenannten Beispiele aus dem Stand der Technik ist zusätzlich, dass ihr Betrieb mit einer teilweise erheblichen Geräuschbelastung verbunden ist.

Eine weitere Anordnung ist in der DE 10 2004 052 562 B3 offenbart. Die Antriebswelle ist mit dem Steuerrad verbunden und an der Welle ist eine Zahnscheibe angeordnet. Das Gehäuse mit einem Elektromotor als Hilfsantrieb und dem Getriebe ist mit der Abtriebswelle drehfest verbunden. Vom Hilfsantrieb wird ein Rotor um die Längsachse bewegt angetrieben, wobei die Rotorwelle an einem Ende abgeknickt ausgeführt ist und darauf eine um die Achse taumelnde Zahnscheibe aufweist. Eine weitere Zahnscheibe ist am drehenden Gehäuse angeordnet und die taumelnde Zahnscheibe ist jeweils gleichzeitig in einem Teilbereich der beiden Zahnscheiben gleichzeitig im Eingriff. Durch die unterschiedliche Zähnezahl der beiden Zahnscheiben wird das gewünschte Übersetzungsverhältnis eingestellt. Diese Einrichtung besitzt aber den Nachteil, dass das Gehäuse und entsprechend weitere Komponenten, einschliesslich des Elektromotors, sich mit der Antriebswelle mitdrehen. Das verursacht erhöhte Trägheitsmomente, die beispielsweise beim Einsatz in einem Lenksystem, störend sein können. Weiter ist der elektrische Anschluss des mitdrehenden Elektromotors aufwändig.

Die Aufgabe der vorliegenden Erfindung besteht darin, zumindest einige der Nachteile des Standes der Technik zu beseitigen und gleichzeitig eine kompakte Baugruppe bereit zu stellen, die eine Drehzahlüberlagerung mit wenigen und möglichst einfach herzustellenden Bauteilen gestattet. Weiter soll die Verbindung der Energieversorgung des Hilfsantriebes sowie mit im Bedarfsfall verwendeten Sensoren vereinfacht werden durch eine karosseriefeste Trägeranordnung bzw. Gehäuse und es sollen vor allem die Laufgeräusche verringert werden.

Die Aufgabe wird erfindungsgemäss durch die Drehzahlüberlagerungseinrichtung entsprechend dem Anspruch 1 gelöst. Die abhängigen Patentansprüche 2 bis 13 betreffen bevorzugte Ausführungsformen der Drehzahlüberlagerungseinrichtung.
Dabei wird eine Überlagerungseinrichtung zur Drehzahlüberlagerung vorgeschlagen welche umfasst:
- eine Antriebswelle und eine Abtriebswelle, welche in Längsrichtung zueinander und in einer gemeinsamen Längsachse um diese drehbar angeordnet sind,
- eine karosseriefest angeordnete Trägeranordnung, in welcher die Antriebswelle und die Abtriebswelle mindestens teilweise gelagert, drehbar positioniert sind,
- einen um die Längsachse drehbar gelagerten Rotor, der eine der beiden Wellen mindestens in Teilbereichen koaxial umschliesst, wobei der Rotor mit einem Hilfsantrieb wirkverbunden ist,
- wobei die Antriebswelle mit einer ersten Zahnscheibe drehfest verbunden ist, und dass die Abtriebswelle mit einer zweiten Zahnscheibe drehfest verbunden ist, und dass am Rotor mindestens ein weiteres scheibenförmige Zahnrad rotierbar um eine der Wellenachsen gelagert angeordnet ist, wobei die Verzahnung des weiteren Zahnrades gleichzeitig, auf einem jeweiligen Teilbereich des Umfanges der beiden Zahnscheiben in die beiden Verzahnungen der ersten und zweiten Zahnscheibe eingreift,
- wobei die Drehachse des scheibenförmigen Zahnrades gegenüber der Längsachse um einen Winkel α verkippt am drehbaren Rotor angeordnet ist, derart dass das Zahnrad als Taumelscheibe und die verkippte Drehachse als Taumelachse ausgebildet ist, wobei die anzahl zähne der beiden zahnscheiben unterschiedlich sind.

Der drehbare Rotor wird von einem Hilfsantrieb angetrieben und dreht um die Längsachse der Anordnung. An einem Ende des Rotors ist das weitere Zahnrad die Taumelscheibe um den Winkel α verkippt angeordnet, derart dass dieses Zahnrad eine um die Längsachse taumelnde Rotationsbewegung ausführt. Die erste Zahnscheibe verbunden mit der Abtriebswelle und die Zweite Zahnscheibe verbunden mit der Antriebswelle rotieren ebenfalls wie der Rotor mit der Taumelscheibe um dieselbe Längsachse der Anordnung, sind aber mindestens teilweise in Achsrichtung gegen die Taumelscheibe versetzt angeordnet. Die Verzahnungen der beiden Zahnscheiben liegen auf einer gemeinsamen Fläche und fluchten zueinander. Neben einer ebenen Fläche wird eine Kegelfläche bevorzugt, auf der sich die Taumelscheibe bei Rotation abwälzt, wobei deren Verzahnung in einem Teilbereich des Verzahnungsumfanges in beide Verzahnungen der beiden Zahnräder gleichzeitig eingreift. Die Taumelscheibe wird mit Vorteil auf dem abgekippten Wellenstück des Rotors mit einem Lager drehbar um die Taumelachse gelagert angeordnet.
Die Zähnezahl und der Teilkreisdurchmesser der Zahnscheiben sind unterschiedlich ausgebildet, wodurch sich das kleinere Zahnrad mit der geringeren Zähnezahl getrieben durch die abwälzende Taumelscheibe schneller dreht als das grössere Zahnrad. Durch geeignete Wahl der Differenz der Anzahl Zähne der Zahnscheiben kann das Übersetzungsverhältnis vorgegeben werden.

Die Antriebswelle und die Abtriebswelle müssen nicht als klassisch stab- oder rohrförmige Wellen ausgebildet sein, sie können auch als massive Bauteile mit beispielsweise nicht runder Form, wie beispielsweise als Gelenkteil, oder Teil eines Kugelgewindetriebes oder anderer Komponenten ausgebildet sein. Auch kann die Antriebs- und Abtriebsfunktion gegeneinander vertauscht sein.

Durch fluchten der Achsen der Antriebswelle und der Abtriebswelle in einer einzigen Längsachse und die koaxiale Anordnung der drei Zahnräder und des Rotors wird eine besonders einfache und kompakte Anordnung erzielt und es werden für das Überlagerungsgetriebe sehr wenig bewegte Bauteile benötigt. Die beide Wellen liegen in gleicher Achse hintereinander und voneinander entkoppelt drehbar gelagert angeordnet. Die beiden Zahnscheiben sind dann mit Vorteil als Kegelräder, im Vergleich zu ebenen Zahnscheiben, was einem Kegelwinkel von 0° entspricht, ausgebildet, wobei die Zahnspitzen der beiden Verzahnungen in Richtung der Taumelscheibe ausgerichtet sind. Die Verzahnungen der beiden Zahnscheiben liegen in der bevorzugten Ausführungsform in einer gemeinsamen Fläche bzw. Kegelfläche und unmittelbar nahe beieinander mit ihren Achsen drehbar um die Längsachse angeordnet sind wodurch für das weitere Zahnrad, das Taumelrad, ein gleichzeitiger auf einen Teilbereich begrenzter Eingriff in die Verzahnungen der beiden Zahnscheiben leicht realisierbar ist. Der Eingriff der Taumelscheibe in diesem Teilbereich der Verzahnungen sollte in mindestens einem Zähnepaar erfolgen, vorzugsweise einige Zähne umfassen, wie beispielsweise 3 bis 6 Zähne. Die Auslegung der Verzahnungen und der Räderdimensionen erfolgt hierbei nach den üblichen mechanischen Kriterien.

Die vorliegende Anordnung wird besonders bevorzugt eingesetzt bei einem Lenkungssystems für ein Kraftfahrzeug.

Die Verkippung der Taumelscheibe mit ihrer Achse, der Taumelachse um den Winkel α liegt innerhalb einem Wert von 1° bis 45°, vorzugsweise innerhalb von 2° bis 15°.
Die beiden Zahnscheiben weisen eine unterschiedliche Zähnezahl auf, so dass nach einer Umdrehung des Rotors des Hilfsantriebes, die beiden Zahnscheiben um den Winkel, den die Differenz der Zähnezahlen der beiden Zahnscheiben ausmacht, im Winkel verschoben sind. Wird die erste Zahnscheibe der Antriebseinheit im Stillstand gehalten, so verdreht sich die Zahnscheibe der Abtriebseinheit um diesen entsprechenden Winkel je Umdrehung des Rotors des Hilfsantriebes. Das resultierende Übersetzungsverhältnis wird bezogen auf eine still stehende Antriebswelle. Bei ruhendem Hifsantrieb bzw. bei ruhendem Rotor wird die Antriebswelle 1:1 übersetzt.
Daraus kann ein Übersetzungsverhältnis zwischen Drehzahl des Rotors des Hilfsantriebes und der Drehzahl der Abtriebseinheit bestimmt werden, das im folgenden als Übersetzungsverhältnis des Überlagerungsgetriebes bezeichnet wird.

Die bekannten Überlagerungsgetriebe für Lenksysteme weisen entweder eine hohe Anzahl von Einzelteilen auf, von denen einige sehr aufwändig und teuer in der Herstellung sind, oder die gesamte Einrichtung wird mitbewegt, was bekannte andere Nachteile bedingt.
Dabei arbeiten die bekannten Überlagerungsgetriebe für Lenksysteme, beispielsweise mit Planetengetriebe oder Harmonic Drive, mit grossen Übersetzungsverhältnissen. Dabei sind für Planetengetriebe Übersetzungen im Bereich von 1:15 bis 1:30 typisch, wobei sich die Planenten selbst jedoch mit der dreifach höheren Drehzahl drehen. Für Harmonic Drive Getriebe liegen die Übersetzungen typisch im Bereich von 1:50 bis 1: 100. Dies bedeutet beispielsweise, dass 100 Umdrehungen des Rotors des Hilfsantriebes zu einer Umdrehung der Abtriebswelle übersetzt wird.
Diese grosse Anzahl drehender Getriebeelemente führt jedoch zu einer unerwünscht hohen Geräuschbildung. Darüber hinaus hat sich im Verlaufe der Entwicklung der erfindungsgemässen Lösung gezeigt, dass insbesondere auch die teilweise hohen Drehzahlen der einzelnen Getriebekomponenten zu unerwünscht hoher Geräuschentwicklung beim Betrieb des Fahrzeuges führen.

Die hier vorgestellte Erfindung ermöglicht hingegen, durch die Anwendung unüblich niedriger Übersetzungsverhältnisse bei einer gleichzeitigen Reduktion der Anzahl der in Zahneingriff stehenden Getriebekomponenten, das System mit geringeren Drehzahlen im Überlagerungsgetriebe zu betreiben, ohne den Drehzahlverstellbereich bzw. Überlagerungsbereich einschränken zu müssen. Beide Massnahmen führen zu einer wesentlichen Verringerung des Betriebsgeräusches. Das gesamte Übersetzungsverhältnis des vorgestellten Überlagerungsgetriebes liegt hierbei mit Vorteil bei 1:10 und darunter. Zusätzliche feste Übersetzungen können diesem Überlagerungsgetriebe je nach Wahl des Hilfsantriebes vorgeschaltet werden. Bevorzugt kann dies eine Schneckengetriebe, ein Transmissionsanordnung mit Riemen, wie Zahnriemen oder Ketten sein. In diesem Fall kann der Motor des Hilfsantriebes auch ausserhalb der Trägeranordnung oder des Gehäuse angeordnet werden. Der Hilfsantrieb kann einen Elektromotor oder einen Hydraulikmotor enthalten. Dabei wird die Tatsache ausgenutzt, dass Schnecken- und Riementriebe trotz möglicher hoher Drehzahlen der Schnecke bzw. des Antriebsrades keine sehr grossen Geräusche verursachen.

Die Drehzahl des Rotors des Hilfsantriebs erreicht dabei Werte von 1000 bis 2000 Umdrehungen je Minute. Das bedeutet, dass sich die Planeten eines entsprechenden Planetengetriebes mit etwa 3000-6000 Umdrehungen je Minute drehen.

Besonders vorteilhaft ist es eine Elektromotor zu verwenden, der direkt an der Trägeranordnung oder im Gehäuse dieser Trägeranordnung koaxial um die Längsachse integriert angeordnet ist. Hierbei ist der Rotor identisch mit dem Rotor des Elektromotors. Dieser Motor ist mit Vorteil ein elektronisch kommutierter Motor. Der Stator mit den Erregerwicklungen ist hierbei Gehäusefest an der äusseren Peripherie, den Rotor umgebend, angeordnet und der Rotor trägt Energiestarke Permanentmagnete.

Die Trägeranordnung, die bevorzugt als Gehäuse ausgebildet ist, ist direkt oder indirekt mit dem Fahrzeugchassis verbunden. Dies ermöglicht eine wesentliche Vereinfachung der Leitungsführung für Einspeisung und Messsignale.

Mit der Anordnung wird erreicht, dass, solange der Hilfsantrieb gegen die Trägeranordnung blockiert ist bzw. nicht in Bewegung gesetzt ist , die Antriebsdrehzahl direkt über die erste Zahnscheibe, über die Taumelscheibe in die zweite Zahnscheibe und damit auf die Abtriebseinheit übertragen wird. Sobald der Hilfsantrieb die Taumelscheibe in Drehung versetzt, addieren sich die Drehzahlen der Antriebseinheit und die, um das Übersetzungsverhältnis des Überlagerungsgetriebes übersetzte, Rotordrehzahl.

Aus dem Betriebszustand des Fahrzeuges, wie Geschwindigkeit, Strassenzustand, gewünschter Lenkeinschlag und weiteren Grössen kann ein Steuersystem Vorgaben für eine geeignete Drehzahlüberlagerung bestimmen und daraus Vorgaben für die Ansteuerung des Hilfsantriebes bestimmen.

Wichtige Vorteile der neu vorgestellten Technik bestehen darin, dass die Geräuschentwicklung im Betrieb wesentlich verringert ist, und dass das Getriebe aus weniger Bauteilen besteht sowie, dass die verwendeten Zahnräder und Zahnscheiben einfacher herzustellen sind, als die Zahnräder für ein Planetenradgetriebe. Die Anforderungen an die Zahnräder für die neue Technik sind geringer, da die Toleranzkette für den gesamten Weg der Drehwinkelübertragung kürzer ist. Besonders vorteilhaft können die Komponenten durch Schmieden, warm oder auch kalt sowie in Sintertechnologie, hergestellt werden.

In einer vorteilhaften Weiterbildung der Erfindung wird in das Überlagerungsgetriebe eine Sicherheitskupplung bzw. eine Schaltung integriert, die im Fehlerfall oder besonderen Fahrzeugsituationen - wie beispielsweise Stromausfall, Ausfall der Steuerung oder ausgeschaltete Zündung usw. - eine direkte mechanische Kopplung zwischen An- und Abtriebswelle erzwingt, so dass der Fahrer die vollständige Kontrolle über das Lenkungssystem erhält. Die Kopplung kann beispielsweise in sehr einfacher Weise durch das Blockieren des Rotors des Hilfsantriebes in Bezug auf den Stator beziehungsweise das Gehäuse der Einrichtung erfolgen.

Entsprechend der vorgestellten Erfindung ist sowohl die Anordnung der Überlagerungseinrichtung zwischen Lenkgetriebe und Steuerrad als auch zwischen Lenkgetriebe und Spurstange oder im Lenkgetriebe möglich. Die Auswahl erfolgt nach den jeweiligen Gegebenheiten des Bauraums und nach anderen technischen und kommerziellen Erfordernissen. Für den Fall, dass die Einrichtung zwischen Lenkgetriebe und Spurstange oder im Lenkgetriebe angeordnet ist, wird in der Regel die Abtriebswelle direkt mit einem Umwandlungsgetriebe zur Übersetzung einer Drehbewegung in eine Translationsbewegung verbunden sein. Beispielsweise wird hier direkt eine Kugelgewindemutter angetrieben.

Die Erfindung wird nun nachfolgend beispielsweise und mit schematischen Figuren für bevorzugte Ausführungsformen näher erläutert. Es zeigen:
- Fig. 1: Schematischer Aufbau eines Lenksystems mit Hilfs- kraftunterstützung;
- Fig. 2: Längsschnitt durch eine erste Ausführungsform ent- sprechend der Erfindung für eine Drehzahlüberlage- rungseinrichtung mit einer Taumelscheibe kombiniert mit Schneckenradgetriebe;
- Fig. 3: Anordnung gemäss Figur 2 in dreidimensionaler Dar- stellung;
- Fig. 4: Längsschnitt durch eine weitere bevorzugte Ausfüh- rungsform entsprechend der Erfindung für eine Dreh- zahlüberlagerungseinrichtung mit einer Taumelschei- be kombiniert mit innerhalb des Gehäuse koaxial an- geordnetem Elektromotorantrieb;
- Fig. 5: Anordnung gemäss Figur 4 in dreidimensionaler Dar- stellung;
- Fig. 6: Längsschnitt durch eine weitere Ausführungsform entsprechend der Erfindung für eine Drehzahlüberla- gerungseinrichtung mit einer Taumelscheibe kombi- niert mit Zahnriemengetriebe;
- Fig. 7: dreidimensionale Darstellung der verzahnten Taumel- scheibe im Detail;
- Fig. 8: dreidimensionale Darstellung eines Überlagerungsge- triebes mit ausserhalb angeordnetem Motor und Schneckenradgetriebe entsprechend der Ausführungs- form, wie sie in Figur 2 gezeigt ist;
- Fig. 9: dreidimensionale Darstellung eines Überlagerungsge- triebes mit innerhalb des Gehäuse, koaxial angeord- netem Elektromotorantrieb entsprechend der Ausfüh- rungsform, wie sie in Figur 4 gezeigt ist;
- Fig.10: dreidimensionale Darstellung eines Überlagerungsge- triebes mit ausserhalb angeordnetem Motor und Transmissionsantrieb entsprechend der Ausführungs- form, wie sie in Figur 6 gezeigt ist;

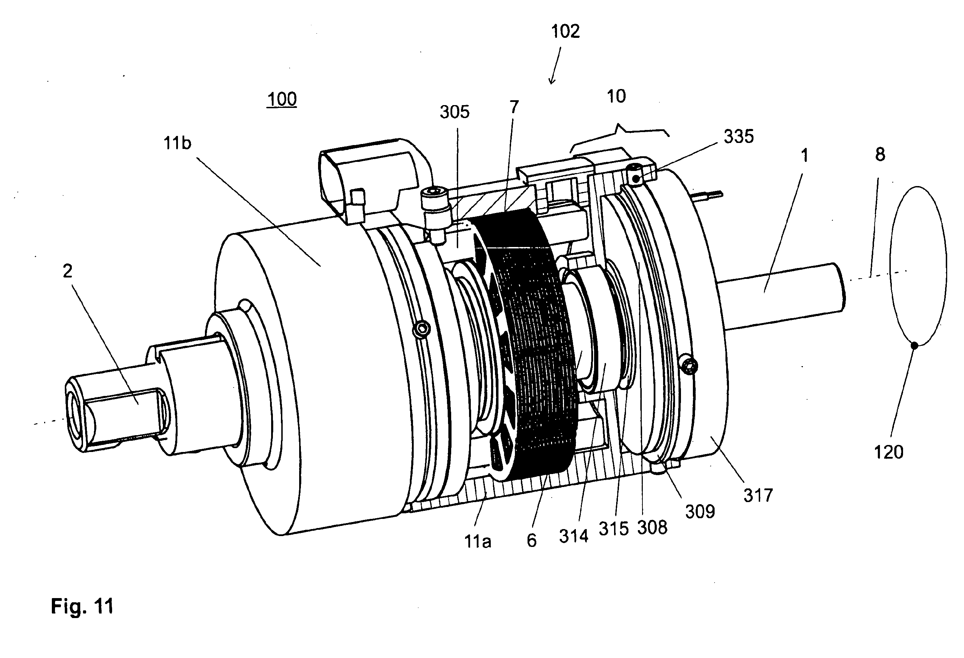

- Fig. 11: eine Ausführungsform der Drehzahlüberlagerungsein- richtung mit einstellbare Sicherheitskupplung in perspektivischer Darstellung;
- Fig. 12: im Längsschnitt, eine weitere bevorzugte Ausfüh- rungsform entsprechend der Erfindung für eine Dreh- zahlüberlagerungseinrichtung mit Reibscheiben ange- ordnet parallel zu den Verzahnungen.

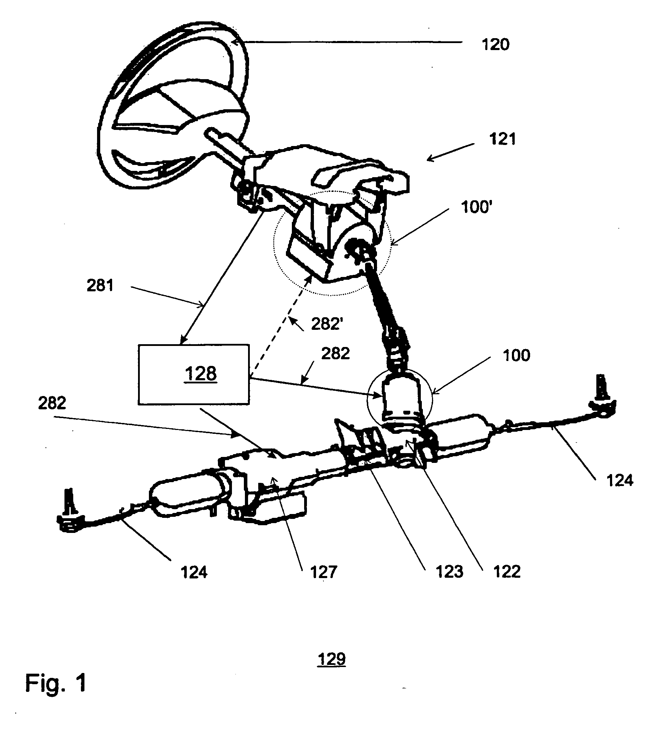

Der in Figur 1 gezeigte schematische Aufbau einer Lenkvorrichtung 129 als Lenkvorrichtung 129 mit elektrischer Hilfskraftunterstützung entspricht im Wesentlichen dem Stand der Technik. Sie besteht unter anderem aus einem Steuerrad 120, einer Lenksäule 121, dem Lenkgetriebe 122 und den beiden Spurstangen 124. Die Spurstangen 124 werden durch die Zahnstange 123 angetrieben. Zur Drehzahlüberlagerung dient die erfindungsgemäße Überlagerungseinrichtung 100, 100' oder 127 oder die innerhalb des Lenkgetriebes 122 integrierte Überlagerungseinrichtung.

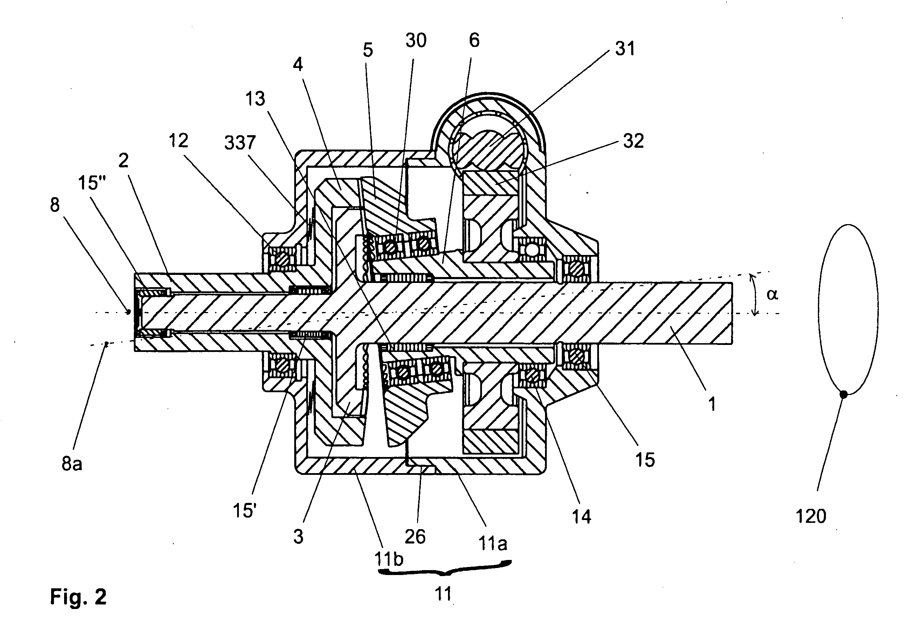

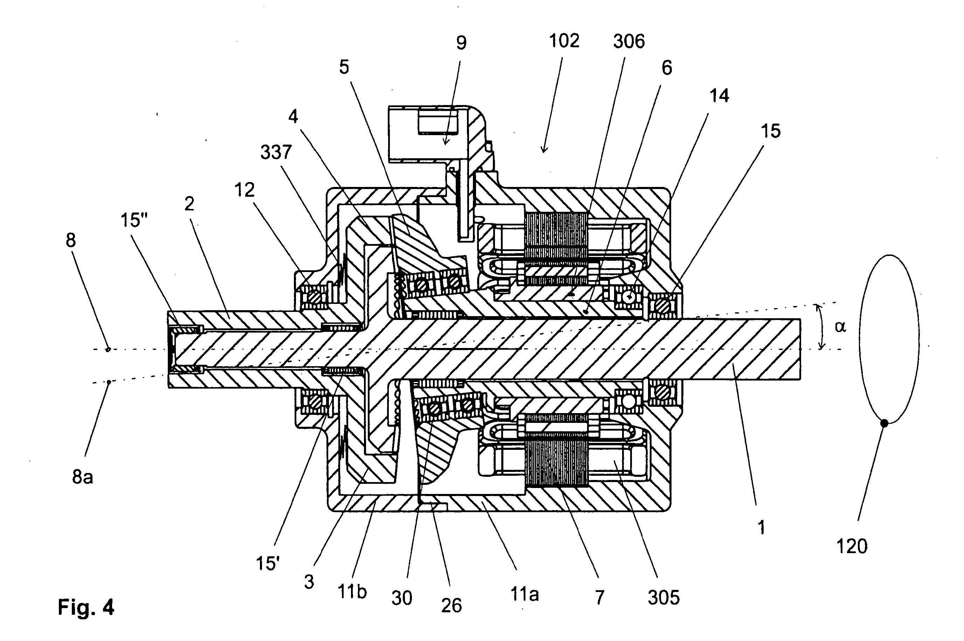

In der bevorzugten Ausführungsform befindet sich die Überlagerungseinrichtung zwischen Steuerrad 120 und Lenkgetriebe 122, beispielsweise an der mit 100 gekennzeichneten Stelle. In den Figuren 2 und 4 ist nur diese Ausführungsform des Überlagerungsgetriebes 100 näher gezeigt.

In einer weiteren Ausführungsform wird die Überlagerungseinrichtung zwischen Lenkgetriebe 122 und Spurstangen 124 oder im Lenkgetriebe angeordnet. Die Überlagerungseinrichtung 127 enthält dann ein Umwandlungsgetriebe zur Übersetzung der Drehbewegung in eine Translationsbewegung, beispielsweise einen Kugelgewindetrieb.

In allen Ausführungsformen wird - im Normalfall - der Fahrerwunsch durch das Steuerrad 120 über eine hier nicht gezeigte Sensorik als Signal 281 in ein Steuergerät 128 eingespeist. Im Steuergerät 128 wird daraus, gegebenenfalls unter Zuhilfenahme eines Sensorsignals des Hilfsantriebes des Lenksystems (Signalleitung hier nicht dargestellt) und/oder der Drehzahlüberlagerungseinheit und weiterer den Fahrzeugzustand beschreibender Signale, die entsprechende Steuerspannung 282 für den Elektromotor bestimmt und an den Elektromotor, der in der Überlagerungseinrichtung 100 ausgegeben.

Die Erfindung bezieht sich auf die Überlagerungseinrichtung 100 in der Anordnung in einem Lenksystem 129 für ein Kraftfahrzeug. Dabei kann das Lenksystem mit oder ohne Hilfskraftunterstützung ausgelegt sein. Dabei ist es unerheblich ob die eventuell vorhandene Hilfskraftunterstützung des Lenksystems hydraulisch, pneumatisch oder elektrisch erfolgt.

Die Überlagerungseinrichtung 100 weist eine Antriebswelle 1, die direkt oder indirekt vom Steuerrad 120 angetrieben wird, eine Abtriebswelle 2, die direkt oder indirekt die Spurstangen antreibt, eine Trägeranordnung 11a, 11b, einen Hilfsantrieb, bevorzugt ein Elektromotor 6, 7, und zwei Zahnscheiben 3, 4 sowie mindestens ein weiteres Zahnrad 5 auf.

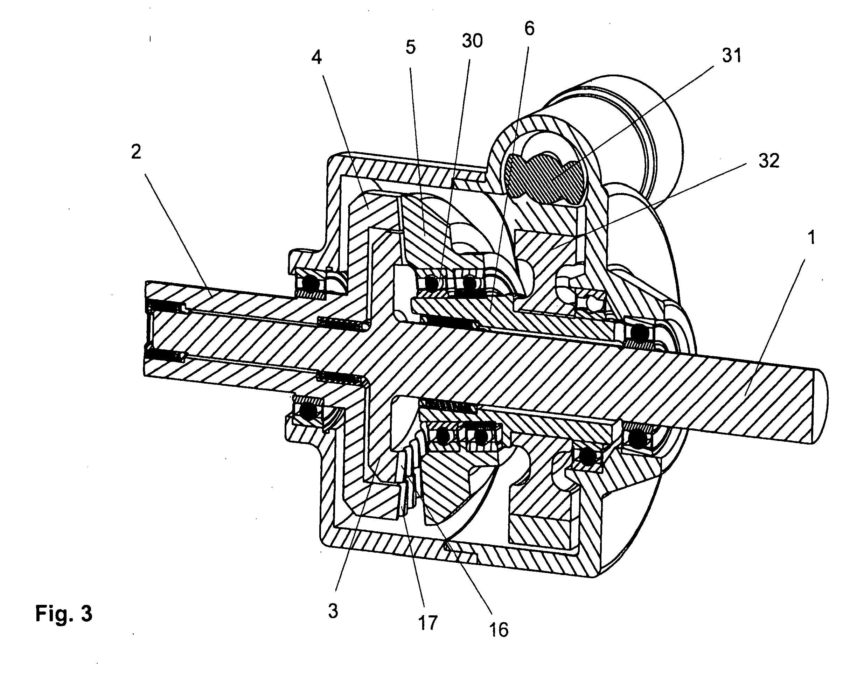

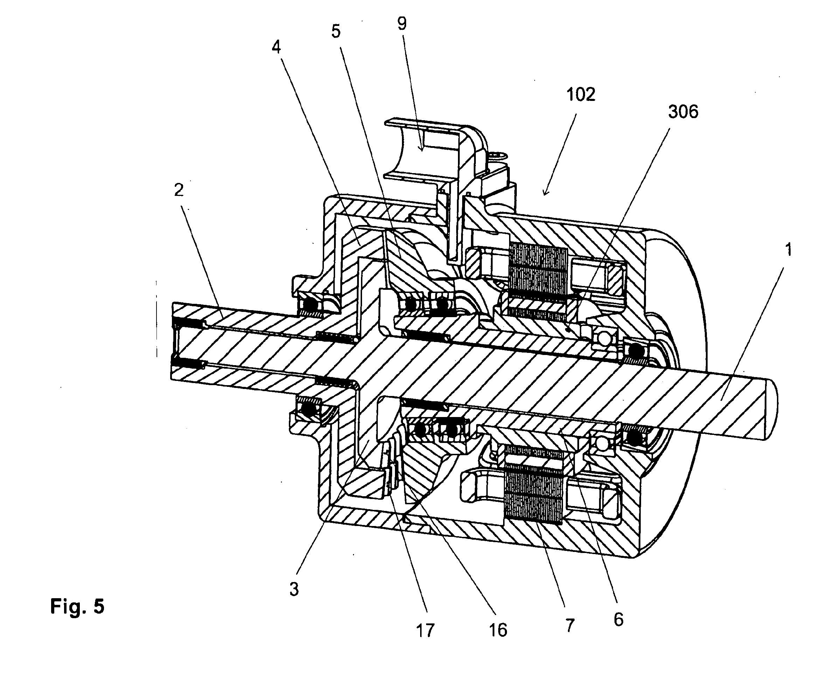

Die Details der Erfindung werden nun Anhand der Figuren 2 bis 7 mit verschiedenen Ausführungsbeispielen im weiteren erläutert.

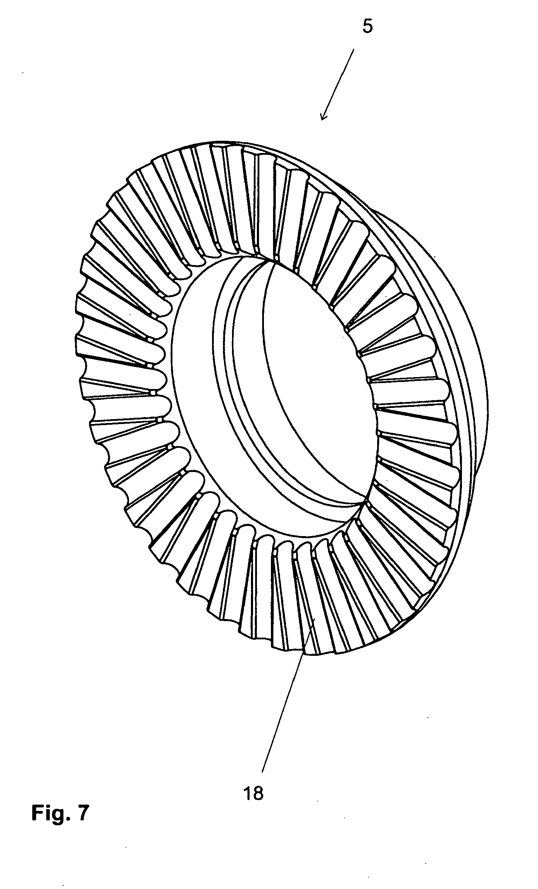

Die Drehzahlüberlagerungseinrichtung in der hier gezeigten Ausführungsform umfasst folgende Komponenten:
- eine Antriebseinrichtung, hier die Antriebswelle 1, mit einer Drehachse 8,
- eine Abtriebseinrichtung, hier die Abtriebswelle 2, mit einer Drehachse 8,
- ein Hilfsantrieb 101, 102 der einen Rotor 6, mit einer Drehachse 8, antreibt,
- einer karosseriefesten Trägeranordnung, vorteilhaft als Gehäuse 11 ausgebildet, wie beispielsweise bestehend aus den mindestens zwei Gehäuseteilen 11a und 11b, die die Wellen 1,2 und den Rotor 6 des Hilfsantriebs in den Lagern 12, 15-15" bzw. 13, 14, wobei diese Gehäuseteile vorzugsweise mit einem Gewinde 26 verschraubbar sind,
- eine erste, an der Antriebswelle 1 antriebsseitig angeordnete, Zahnscheibe 3, mit einer Drehachse 8, die die Verzahnung 16 trägt,
- eine zweite, an der Abtriebswelle 2 abtriebsseitig angeordnete, Zahnscheibe 4, mit einer Drehachse 8, die die Verzahnung 17 trägt,
- ein weiteres, mit dem Rotor 6 verbundenes, Zahnrad 5, das gegenüber der Rotorachse bzw. der Längsachse 8 um den Winkel α verkippt angeordnet und bei Rotation des Rotors durch die Verkippung um die Längsachse taumelt und dadurch die verzahnte Taumelscheibe bildet, wobei die verkippte Achse der Taumelscheibe 5 die Taumelachse 8a darstellt;
wobei die Drehachsen 8 von Antriebs- und die Abtriebswelle 1,2 vorzugsweise in einer einzigen Längsachse mit einem Drehzentrum 8 angeordnet sind und die Verzahnungen 16, 17 der beiden Zahnscheiben 3, 4 parallel zueinander ausgerichtet sind, wobei sich beide Verzahnungen 16, 17, von ihren Zahnfüssen zu den Zahnspitzen gesehen, in Richtung der Verzahnung 18 des weiteren Zahnrades 5, der Taumelscheibe 5 erstrecken und mit dieser an Teilen des Umfangs in Eingriff stehen. Die beiden Zahnscheiben 3, 4 greifen hierbei bevorzugt, von ein und derselben Seite der Taumelscheibe, mit verschiedenem Abstand von der Längsachse 8 bzw. der Taumelachse 8a, der auch Teilkreis genannt wird, in die Verzahnung der Taumelscheibe 5 ein. In der bevorzugten Ausführungsform verlaufen die Zahnspitzen der beiden Verzahnungen 16, 17 der beiden Zahnscheiben in gleicher Richtung und fluchten miteinander im Eingriffsbereich des weiteren Zahnrades 5. Die Verzahnungen der beiden Zahnräder 3, 4 liegen auf derselben Fläche, vorzugsweise auf einer Kegelmantelfläche. In der bevorzugten Ausführungsform besitzen die Zahnscheiben 3, 4 Verzahnungen 16, 17 mit unterschiedlichen Zähnezahlen. Die Taumelscheibe 5 ist ebenfalls in einer seitlichen Fläche der Scheibe mit einer Verzahnung 18 verzahnt, welche das Drehzentrum der Scheibe oder die Taumelachse 8a kreisförmig umschliesst, wie dies im Detail in Figur 7 dargestellt ist. Die Verzahnung 18 kann hierbei, mit Vorteil, auch auf einer Kegelmantelfläche liegen, wobei es günstig ist diese auf der Innenfläche der Kegelmantelfläche der Verzahnungen 16, 17 der beiden Zahnscheiben 3, 4 anzupassen. Hierbei sind in der Regel nur geringe Neigungen der Verzahnungsfläche gegenüber einer planen Fläche denkbar und möglich.

Denkbar und möglich ist es jedoch auch, dass die beiden Verzahnungen 16, 17 der beiden Zahnscheiben 3, 4 in zwei an den Flächen der Taumelscheibe 5 gegenüberliegend angeordneten Verzahnungen 18 eingreifen.

Der Winkel α, unter dem die Taumelscheibe 5 mit ihrer Taumelachse 8a gegenüber der Längsachse 8 abgewinkelt ist, beträgt bevorzugt zwischen 1° und 45°, vorzugsweise zwischen 2° und 15°.

Wie in den Figuren zu erkennen ist, greift die Verzahnung des mindestens einen weiteren Zahnrades 5, der Taumelscheibe gleichzeitig in beide Verzahnungen 16 und 17 der beiden Zahnscheiben 3 und 4 ein. Der Eingriff erfolgt hierbei nur in einem Teilbereich des gesamten Umfanges der Zahnräder, was einem Bruchteil des gesamten verzahnten Umfanges entspricht, also nur bei einigen Zähnen, vorzugsweise bei etwa 2 bis 5 Zähnen. Dadurch wälzt sich die verzahnte Taumelscheibe 5 beim Drehen des Rotors 6 über den Umfang der Zahnräder ab, wobei der Eingriff aller drei Zahnräder in jeder Position erhalten bleibt. Der Taumelwinkel α wird durch entsprechende Verkippung eines Endstückes der Rotorwelle 6 erzielt und dort die Taumelscheibe 5 angeordnet. Zwischen der Taumelscheibe 5 und diesem abgekippten Wellenteilstück des Rotor 6 wird mit Vorteil ein weitere Lager 30, als Taumelscheibenlager 30, vorgesehen derart, dass die Taumelscheibe um die verkippte Taumelachse 8a leicht drehbar ist.

Die Antriebswelle 1 wird vom Steuerrad 120 in Drehung versetzt und überträgt ihre Drehung auf die erste, antriebsseitige, Zahnscheibe 3. Über die Zahnflanken der Verzahnung 18 des weiteren Zahnrades 5 wird, die vom Steuerrad 120 in die Verzahnung 16 der ersten, antriebsseitigen, Zahnscheibe 3 eingeleitete Drehzahl auf die Verzahnung 17 der zweiten, abtriebsseitigen, Zahnscheibe 4 und damit auf die Abtriebswelle 2 übertragen, wie dies aus den Figuren 2 bis 7 ersichtlich ist. Die Ausgangsdrehzahl an der Abtriebswelle 2 ist dann bestimmt durch die Eingangsdrehzahl an der Antriebswelle 1 multipliziert mit dem Quotienten aus der Anzahl Zähne der Verzahnung 16 der ersten, antriebsseitigen, Zahnscheibe 3 geteilt durch die Anzahl der Zähne der Verzahnung 17 der zweiten, abtriebsseitigen, Zahnscheibe 4. Die erste Zahnscheibe (3) weist mit Vorteil die geringere Zähnezahl auf gegenüber der zweiten Zahnscheibe (4). Es ist sehr günstig das Übersetzungsverhältnis mit maximal 1:10 auszulegen. Bei vorliegender Getriebeanordnung ist dies ohne weiteres möglich.

Wird der Hilfsantrieb angetrieben, so wird die Drehzahl dessen Rotors 6 auf die Taumelscheibe 5 taumelnd in Rotation um die Längsachse 8 versetzt. Dadurch werden die beiden Zahnscheiben 3, 4 gegeneinander in eine Relativverdrehung versetzt, die von den Zähnezahlen der Verzahnungen 16, 17 abhängt. Mit einfachen getriebetechnischen Überlegungen kann nun hier ein gewünschtes Übersetzungsverhältnis von Drehzahl des Rotors 6 mit der Taumelscheibe 5 zur Drehzahl der Abtriebswelle, bei nicht drehender Antriebswelle, ausgelegt werden. Allerdings gestattet der Grundsätzliche Getriebeaufbau nur eine Drehzahluntersetzung, was insoweit vorteilhaft ist, weil der eingesetzte Elektromotor dadurch mit einer höheren, für Elektromotoren günstigeren Drehzahl, betrieben werden kann.

Wie in den Figuren 2 bis 7 dargestellt ist erfolgt der gleichzeitige Eingriff der Verzahnung 18 des weiteren Zahnrades 5, also der Taumelscheibe in die Verzahnungen 16, 17 der beiden Zahnscheiben 3, 4, mit Vorteil, auf derselben Seite und in demselben Teilbereich des Umfangs des weiteren Zahnrades 5. Die Flächen der Verzahnungen 16, 17 der beiden Zahnscheiben 3, 4 sind mit Vorteil gegenüber der Orthogonalen Ebene zur Längsachse 8 geneigt angeordnet und die Fläche ist hierbei eine Kegelmantelfläche dessen Spitze auf der Längsachse 8 liegt.

Wie in Figur 2 dargestellt, wird in einer Ausführungsform als Hilfsantrieb ein zusätzliches Getriebe mit Antrieb vorgesehen. Das zusätzliche Getriebe ist in diesem Beispiel ein Schneckenradgetriebe 31, 32, wobei das Antriebsschnekkenrad 32 auf der Welle des Rotors 6 drehfest angeordnet ist und die Antriebsschnecke 31 im Eingriff mit diesem Schneckenrad 32 ist und mit einem Antrieb 101 verbunden ist der auch ausserhalb des Gehäuse 11 angeordnet sein kann, wie in den Figuren 2, 3 und 8 dargestellt. Die Ausbildung mit zusätzlichem Schneckenradgetriebe hat den Vorteil, dass die Anordnung selbsthemmend ist und bei einem Fehlerfall der Anordnung keine zusätzliche Sicherheitskupplung bzw. Verriegelungseinrichtung 10 notwendig ist, welche den Rotor 6 gegenüber der Trägeranordnung 11 fixiert. Das bedeutet, dass für den Fall des nicht durch die Schnecke 31 angetrieben Rotors 6 des Hilfsantriebes, die Drehzahl der Antriebswelle 1 direkt auf die Drehzahl der Abtriebswelle 2 übertragen wird.

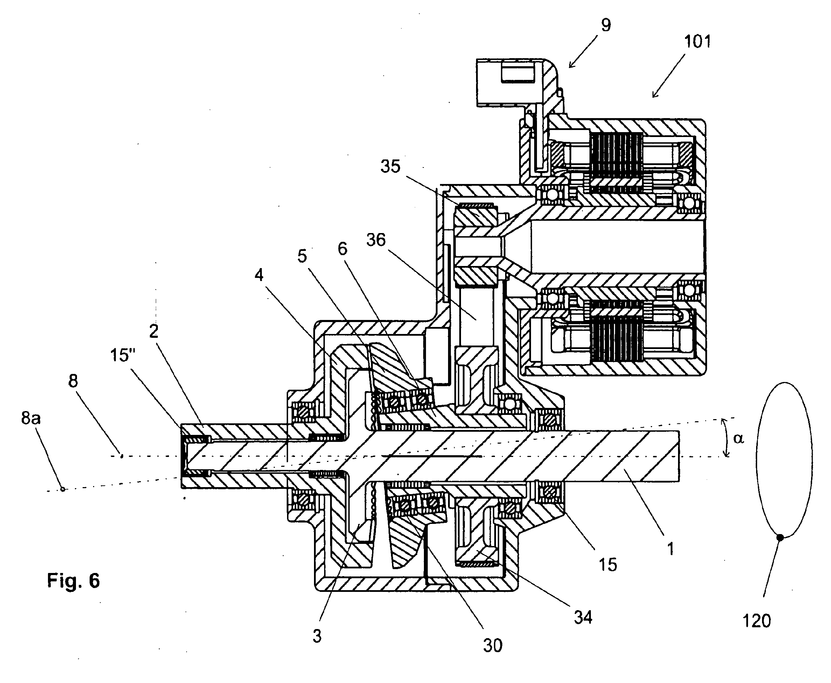

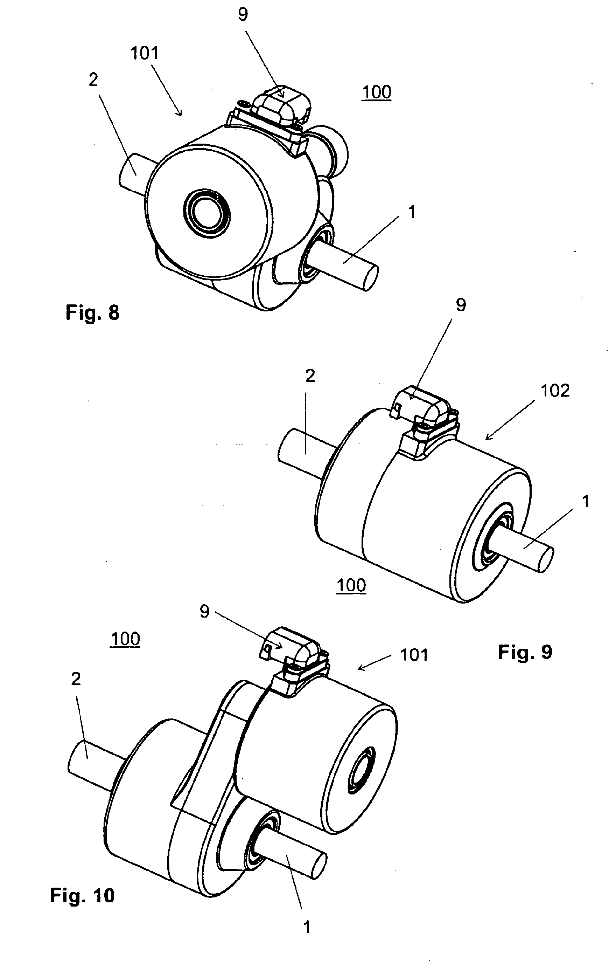

Eine weitere geeignete Möglichkeit besteht darin, dass der Hilfsantrieb ein Getriebe mit Transmissionsmitteln aufweist, wie Riemen- oder Kettentrieb 36 und über Räder 34, 35 den Rotor 6 der Drehzahlüberlagerungseinrichtung antreibt, wie dies in den Figuren 6 und 9 dargestellt ist. Der Antrieb 101 kann hierbei ebenfalls, wie zuvor beschrieben, ausserhalb des Gehäuse 11 angekoppelt werden. Das Antriebsrad 35 am Antrieb 101 wird mit Vorteil mit kleinerem Durchmesser ausgebildet als das Stirnrad 34, welches drehfest auf am Rotor 6 angeordnet , um eine weitere Übersetzung zu vorgeschaltet zum Überlagerungsgetriebe zu realisieren. Es ist günstig für diesen Antrieb Riemen zu verwenden, vorzugsweise Zahnriemen 36, wodurch zusätzliche Geräuschentkopplungen möglich sind.

Bei den zuvor beschriebenen Anordnungen des Überlagerungsgetriebes mit ausserhalb des Gehäuse 11 angeordnetem Antriebsmotor 101 kann anstelle der bevorzugten Ausführung als elektronisch kommutierter Elektromotor, aufgrund der karosseriefesten Anordnung der Trägeranordnung 11 bzw. des Gehäuse 11, in sehr einfacher Weise auch als hydraulischer oder pneumatischer Antrieb ausgebildet sein.

In dieser Ausführungsform mit besonders wenig Einzelteilen wird die Trägeranordnung als mindestens zweiteiliges Gehäuse 11a, 11b ausgelegt, wobei die beiden Gehäusehälften 11a und 11b bevorzugt miteinander verschraubt sind. Dies kann eine flanschartige Anordnung sein oder vorzugsweise eine Verschraubung 26 mit direkt in die Gehäuseteile 11a, 11b eingearbeitetem Gewinde. Bei der Montage können mit Hilfe der Verschraubung die Verzahnungen der Zahnscheiben 3, 4 und der Taumelscheibe 5 spielfrei aber nicht verklemmt in Eingriff gebracht werden, wodurch ein Spielausgleich während der Montage der Drehzahlüberlagerungseinrichtung erreicht ist. Die Axialpositionierung, durch entsprechendes Anziehen der Gehäuseverschraubung 26, erfolgt unter Messung der entsprechenden Winkelspiele zwischen Eingangswelle 1, Ausgangswelle 2 sowie Rotor 6 und Messung entsprechend wirkender Momente beim Verdrehen der Eingangswelle 1, Ausgangswelle 2 sowie des Rotors 6, wobei die Momente möglichst minimale Werte annehmen sollen und die Spiele vorgegebene Werte, beispielsweise 0,5 Winkelgrad nicht überschreiten sollen.

Eine wesentlich bevorzugte Ausbildung der Drehzahlüberlagerungseinrichtung 100 weist einen in die Trägeranordnung 11 bzw. in ein Gehäuse 11 integrierten Elektromotorantrieb 102 auf, wie dies in den Figuren 4, 5 und 9 dargestellt ist. Der Elektromotor 102 ist hierbei mit Vorteil ein elektronisch kommutierter Motor und koaxial um die Längsachse 8 der Anordnung angeordnet. Der Koaxial zu der Antriebswelle 1 mit den Lagern 13, 14 drehbar gelagerte Rotor 6 bildet hierbei gleichzeitig der Rotor 6 des Elektromotors 102, auf welchem Permanentmagnete 306 angeordnet sind. Ein Stator 7 mit den Statorwicklungen 305 umgibt, Gehäusefest angeordnet, den Rotor 6. Am Gehäuse 11 der Anordnung sind Anschlüsse 9 vorgesehen zum Anschluss der Motorspeisung und wahlweise für die Übertragung von Messsignale, wie beispielsweise eine oder mehrere der Drehzahlen der Antriebswelle 1, der Abtriebswelle 2 und/oder des Rotors 6 und / oder der Drehwinkelverstellung. Diese integrierte Motoranordnung lässt sich besonders einfach und kompakt realisieren bei gutem Wirkungsgrad und geringer Geräuschentwicklung. Die Signal können dann an das Steuergerät 128 weitergeleitet werden, so dass daraus die Steuerung des Hilfsantriebes oder auch anderer hier nicht dargestellter Baugruppen im Fahrzeug, wie ein Antiblockiersystem, angesteuert wird.

Bei allen gezeigten Ausführungsbeispielen können vorteilhaft elastische und / oder dämpfende Mittel 337 eingesetzt werden, welche mindestens eine der Verzahnungen 16, 17, 18, zur Erreichung eines Spielausgleiches und / oder einer weiteren Geräuschdämpfung, mit Vorspannung im Eingriff hält. Beispielsweise kann ein elastisches Element 337 oder ein Federelement 337 zwischen dem Gehäuse 11 und einer Zahnscheibe 3, 4 angeordnet werden, welches in axialer Richtung, für den zusätzlichen Spielausgleich der Verzahnungen sorgt.

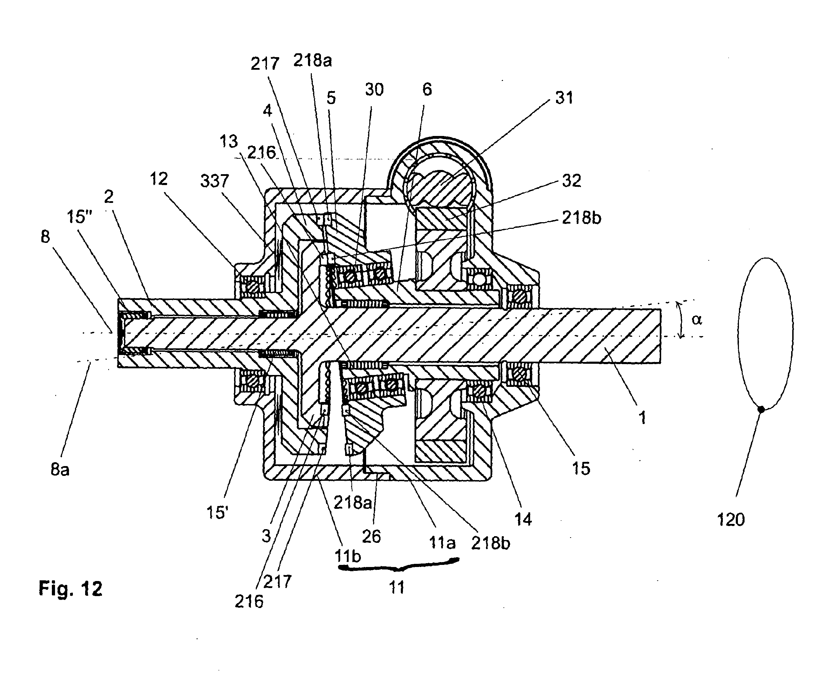

Zur Vermeidung von Spielen und damit verbundenen Geräuschen sind in einer vorteilhaften Weiterbildung der Erfindung parallel zu den jeweiligen Verzahnungen 16, 17, 18 Reibscheiben 216, 217, 218a, 218b angeordnet, die entsprechend den Verzahnungen ebenfalls in Eingriff stehen, wie dies in der Figur 12 schematisch und im Längsschnitt dargestellt ist. Die Reibscheiben sind geeignet, kleinere Drehmomente zu übertragen, was im normalen Fahrbetrieb meist der Fall ist. Wird das über die Reibscheiben übertragbare Drehmoment überschritten, so erfolgt die Übertragung des Drehmomentes über die dann in ihren Flanken in Anlage gebrachten Verzahnungen.

Eine weitere bevorzugte Ausführungsform der Drehzahlüberlagerungseinrichtung umfasst zusätzlich eine Sicherheitskupplung 10 oder Verriegelungseinrichtung, insbesondere bei der Ausführung mit integriertem Elektromotor 102 als Hilfsantrieb, wie dies in Figur 10 dargestellt ist.

Die Sicherheitskupplung 10 ist im Ausführungsbeispiel sehr einfach gestaltet, da durch den Aufbau der Drehzahlüberlagerungseinrichtung eine einfache Verriegelung des Gehäuses 11 mit dem Rotor 6 des Hilfsantriebes 102 ausreicht, um eine vollständige Kopplung der Drehzahl des Steuerrades 120 mit der Drehzahl der Abtriebswelle 2 und somit die vollständige Kontrolle des Fahrers über das Lenksystem, auch im Fehlerfall, zu gewährleisten. Im einfachsten Fall wird die Verriegelung durch einen Stift, der in entsprechende Aussparungen am Rotor 6 eingreift realisiert. Durch das Übersetzungsverhältnis zwischen Abtriebsdrehzahl und Rotordrehzahl sind die Belastungen der Verriegelung nicht sehr gross, so dass es sogar möglich ist, die Verriegelung durch einen Reibschluss zwischen zwei Kontaktelementen 308, 309, wie beispielsweise Scheiben, herzustellen, welche im Fehlerfall gegeneinander bewegt werden. Eines der Kontaktelemente 308 ist über ein Kupplungselement 315 mit dem Rotor 6 verbunden und das andere Kontaktelement 309 ist gegenüber dem Gehäuse 11 drehfest angeordnet. Die Verriegelungseinrichtung kann kompakt, in einem weiteren Teilgehäuse 317 axial zur Überlagerungseinrichtung 100 angeordnet werden, und beispielsweise direkt anschliessend an den Elektromotorantrieb 102, mit Befestigungsmitteln 335, wie Verschraubungen fixiert werden.

Alternativ kann diese Verriegelungseinrichtung auch im extern angeordneten Hilfsantrieb 101 oder am Übertragungsgetriebe zwischen dem extern angeordnetem Hilfsantrieb 101 und dem Überlagerungsgetriebe angeordnet sein.

Das Überlagerungsgetriebe kann in allen Ausführungsformen mit verschiedenen Zahnformen ausgebildet sein. Es sind dabei Schrägverzahnungen und spezielle Zahnkonturen zur Geräuschminderung und Verringerung der Toleranzempfindlichkeit möglich.

## Patentansprüche

1. Drehzahlüberlagerungseinrichtung umfassend:
- eine Antriebswelle (1) und eine Abtriebswelle(2), welche in Längsrichtung zueinander und in einer gemeinsamen Längsachse (8) um diese drehbar angeordnet sind,
- eine karosseriefest angeordnete Trägeranordnung (11a, 11b), in welcher die Antriebswelle (1) und die Abtriebswelle (2) mindestens teilweise gelagert, drehbar positioniert sind,
- einen um die Längsachse (8) drehbar gelagerten Rotor (6), der eine der beiden Wellen (1, 2) mindestens in teilbereichen koaxial umschliesst, wobei der Rotor (6) mit einem Hilfsantrieb (101, 102) wirkverbunden ist,
**dadurch gekennzeichnet, dass** die Antriebswelle (1) mit einer ersten Zahnscheibe (3) drehfest verbunden ist, und dass die Abtriebswelle (2) mit einer zweiten Zahnscheibe (4) drehfest verbunden ist, und dass am Rotor (6) mindestens ein weiteres scheibenförmige Zahnrad (5) rotierbar um eine der Wellenachsen (8) gelagert angeordnet ist, wobei die Verzahnung (18) des weiteren Zahnrades (5) gleichzeitig, auf einem jeweiligen Teilbereich des Umfanges der beiden Zahnscheiben (3, 4), in die beiden Verzahnungen (16,17) der ersten und zweiten Zahnscheibe (3,4) eingreift, wobei die Drehachse (8a) des scheibenförmigen Zahnrades (5) gegenüber der Längsachse um einen Winkel (α) verkippt am drehbaren Rotor (6) angeordnet ist, derart dass das Zahnrad als Taumelscheibe (5) und die verkippte Drehachse (8a) als Taumelachse (8a) ausgebildet ist, wobei die Anzahl Zähne der beiden Zahnscheiben (3, 4) unterschiedlich sind.

2. Drehzahlüberlagerungseinrichtung nach einem der vorhergehenden Ansprüche, **dadurch gekennzeichnet, dass** die Teilkreise der Verzahnung (16, 17) der beiden Zahnscheiben (3, 4) unterschiedlich sind und die Verzahnungen (16, 17) auf der gleichen Fläche liegen und in dergleichen Richtung zueinander ausgerichtet verlaufen und im Eingriffsbereich mit der Verzahnung der Taumelscheibe (5) fluchtend verlaufen.

3. Drehzahlüberlagerungseinrichtung nach einem der vorhergehenden Ansprüche, **dadurch gekennzeichnet, dass** der gleichzeitige Eingriff der Verzahnung (18) des weiteren Zahnrades (5) in die Verzahnungen (16, 17) der beiden Zahnscheiben (3, 4) auf derselben Seite und in demselben Teilbereiches des Umfangs des weiteren Zahnrades (5) erfolgt.

4. Drehzahlüberlagerungseinrichtung nach Anspruch 2, **dadurch gekennzeichnet, dass** die Fläche der Verzahnungen (16, 17) der beiden Zahnscheiben (3, 4) gegenüber der Orthogonalen Ebene zur Längsachse (8) geneigt angeordnet sind und die Fläche eine Kegelmantelfläche ist, wobei deren Spitze auf der Längsachse (8) liegt.

5. Drehzahlüberlagerungseinrichtung nach einem der vorhergehenden Ansprüche, **dadurch gekennzeichnet, dass** an einem Endbereich des Rotor (6) dessen Welle einen um den Winkel (α), gegenüber der Längsachse (8), abgekipptes Wellenteilstück aufweist, welches die Taumelachse (8a) umschliesst, und dass auf diesem Wellenteilstück des Rotors (6) die verzahnte Taumelscheibe (5) angeordnet ist.

6. Drehzahlüberlagerungseinrichtung nach einem der vorhergehenden Ansprüche, **dadurch gekennzeichnet, dass** die erste Zahnscheibe (3) den geringeren Teilkreisdurchmesser aufweist gegenüber der zweiten Zahnscheibe (4) und dass diese diejenige mit der geringeren Zähnezahl ist.

7. Drehzahlüberlagerungseinrichtung nach einem der vorhergehenden Ansprüche, **dadurch gekennzeichnet, dass** das Übersetzungsverhältnis der Anordnung mit den beiden Zahnscheiben (3, 4) zusammenwirkend mit der Taumelscheibe ein Übersetzungsverhältnis von maximal 1:10 aufweist, wodurch die Drehzahl der Abtriebswelle (2) um dieses Verhältnis gegenüber der Drehzahl des Rotors (6) verringert.

8. Drehzahlüberlagerungseinrichtung nach einem der vorhergehenden Ansprüche, **dadurch gekennzeichnet, dass** der Winkel (α) grösser 1° und kleiner 45° ist, vorzugsweise im Bereich von 2° bis 15° liegt.

9. Drehzahlüberlagerungseinrichtung nach einem der vorhergehenden Ansprüche, **dadurch gekennzeichnet, dass** die Einrichtung elastische und / oder dämpfende Mittel (337) aufweist, welche mindestens eine der Verzahnungen (16, 17, 18) mit Vorspannung in Eingriff halten zur Erreichung eines Spielausgleiches und / oder einer Geräuschdämpfung.

10. Drehzahlüberlagerungseinrichtung nach einem der vorhergehenden Ansprüche, **dadurch gekennzeichnet, dass** die Antriebs- und Abtriebsfunktion der Antriebswelle (1) mit der Abtriebswelle (2) vertauscht ist.

11. Drehzahlüberlagerungseinrichtung nach einem der vorhergehenden Ansprüche, **dadurch gekennzeichnet, dass** der Hilfsantrieb (101) ein Elektromotor welcher innerhalb der Trägeranordnung (11) ausgebildet ist, wobei ein Stator (7) mit dem Rotor (6) koaxial zur Antriebswelle (1) bzw. Abtriebswelle (2) ausgerichtet angeordnet ist und der Rotor (6) vorzugsweise Permanentmagnete (306) trägt und der Elektromotor als elektronisch kommutierter Motor ausgebildet ist.

12. Drehzahlüberlagerungseinrichtung nach Anspruch 11, **dadurch gekennzeichnet, dass** die Drehzahlüberlagerungseinrichtung (100, 100') mit einer Brems- und/oder Verriegelungseinrichtung (10) kombiniert ist und diese im Fehlerfall den Rotor(6) mit dem Stator (7) und / oder der Trägeranordnung (11a, 11b) drehfest verriegelt.

13. Drehzahlüberlagerungseinrichtung nach einem der vorhergehenden Ansprüche, **dadurch gekennzeichnet, dass** diese in einem Lenkungssystem (129) für ein Kraftfahrzeug angeordnet ist.

## Claims

1. Device for superimposing rotation speed, comprising:
- a drive shaft (1) and an output shaft (2) which are arranged in the longitudinal direction to each other and in a common longitudinal axis (8) about which they can rotate,
- a carrier arrangement (11a, 11b) provided fixed to the bodywork, in which the drive shaft (1) and the output shaft (2) are mounted at least partly and positioned so they can rotate,
- a rotor (6) which is mounted rotatable about the longitudinal axis (8) and surrounds one of the two shafts (1, 2) coaxially at least in part areas, wherein the rotor (6) is actively connected with an auxiliary drive (101, 102),
**characterised in that** the drive shaft (1) is connected rotationally fixed with a first toothed disc (3) and that the output shaft (2) is connected rotationally fixed with a second toothed disc (4), and that on the rotor (6) is arranged at least one further disc-like gear wheel (5) mounted rotatable about one of the shaft axes (8), wherein the toothing (18) of the further gear wheel (5) engages simultaneously in the two toothings (16,17) of the first and second toothed discs (3, 4) on respective part areas of the periphery of the two toothed discs (3, 4), wherein the axis of rotation (8a) of the disc-like gear wheel (5) is arranged on the rotatable rotor (6) tilted at an angle (α) in relation to the longitudinal axis such that the gear wheel is formed as a swash plate (5) and the tilted axis of rotation (8a) is formed as a wobble axis (8a), wherein the number of teeth of the two toothed discs (3, 4) differs.

2. Device for superimposing rotation speed according to any of the preceding claims, **characterised in that** the reference circles of the toothing (16, 17) of the two toothed discs (3, 4) differ and the toothings (16, 17) lie on the same surface and run aligned in the same direction to each other and flush with the toothing of the swash plate (5) in the engagement area.

3. Device for superimposing rotation speed according to any of the preceding claims, **characterised in that** the simultaneous engagement of the toothing (18) of the further gear wheel (5) in the toothings (16, 17) of the two toothed discs (3, 4) takes place on the same side and in the same part area of the periphery of the further gear wheel (5).

4. Device for superimposing rotation speed according to claim 2, **characterised in that** the surfaces of the toothings (16, 17) of the two toothed discs (3, 4) are arranged in relation to the orthogonal plane tilting towards the longitudinal axis (8) and the surface is a conical casing surface, wherein the tip lies on the longitudinal axis (8).

5. Device for superimposing rotation speed according to any of the preceding claims, **characterised in that** in an end area of the rotor (6), its shaft has a shaft portion which is tilted at an angle (α) in relation to the longitudinal axis (8) and surrounds the wobble axis (8a), and that on this shaft portion of the rotor (6) is arranged the toothed swash plate (5).

6. Device for superimposing rotation speed according to any of the preceding claims, **characterised in that** the first toothed disc (3) has the smaller pitch circle diameter than the second toothed disc (4) and that this is the one with the lower number of teeth.

7. Device for superimposing rotation speed according to any of the preceding claims, **characterised in that** the translation ratio of the arrangement with the two toothed discs (3, 4) cooperating with the swash plate has a reduction ratio of maximum 1:10, whereby the speed of the output shaft (2) is reduced by this ratio in relation to the speed of the rotor (6).

8. Device for superimposing rotation speed according to any of the preceding claims, **characterised in that** the angle (α) is greater than 1° and less than 45°, preferably lies in a range from 2° to 15°.

9. Device for superimposing rotation speed according to any of the preceding claims, **characterised in that** the device comprises resilient and/or damping means (337) which engage with pretension at least in one of the toothings (16, 17, 18) to achieve compensation for play and/or noise damping.

10. Device for superimposing rotation speed according to any of the preceding claims, **characterised in that** the drive and output functions of the drive shaft (1) are interchanged with the output shaft (2).

11. Device for superimposing rotation speed according to any of the preceding claims, **characterised in that** the auxiliary drive (101) is an electric motor which is formed within the carrier arrangement (11), wherein a stator (7) is arranged with the rotor (6) aligned coaxial to the drive shaft (1) or output shaft (2) and the rotor (6) preferably carries permanent magnets (306) and the electric motor is formed as an electronically commutated motor.

12. Device for superimposing rotation speed according to claim 11, **characterised in that** the device for superimposing rotation speed (100, 100') is combined with a brake and/or an interlock device (10) and in the event of a fault, this locks the rotor (6) rotationally fixed with the stator (7) and/or the carrier arrangement (11a, 11b).

13. Device for superimposing rotation speed according to any of the preceding claims, **characterised in that** this is arranged in a steering system (129) for a motor vehicle.

## Revendications

1. Dispositif de superposition de vitesses qui comprend:
- un arbre primaire (1) et un arbre secondaire (2) disposés dans le sens longitudinal l'un par rapport à l'autre et mobiles en rotation autour d'un même axe longitudinal (8),
- une unité de support (11a, 11b) fixée à la carrosserie, dans laquelle l'arbre primaire (1) et l'arbre secondaire (2) sont au moins partiellement logés et positionnés mobiles en rotation,
- un rotor (6) monté mobile en rotation autour de l'axe longitudinal (8), dans lequel ledit rotor entoure coaxialement, au moins sur certains secteurs, l'un des deux arbres (1, 2) et est en liaison active avec un dispositif d'entraînement auxiliaire (101, 102),
**caractérisé en ce que** l'arbre primaire (1) est solidaire en rotation d'un premier disque denté (3), **en ce que** l'arbre secondaire (2) est solidaire en rotation d'un deuxième disque denté (4) et **en ce qu'**il est disposé sur le rotor (6) au moins une roue dentée (5) additionnelle en forme de disque, laquelle est mobile en rotation autour de l'un des axes d'arbre (8) et dont la denture (18) s'engrène, sur une partie de la périphérie de chacun des deux disques dentés (3, 4), avec la denture (16, 17) à la fois du premier (3) et du deuxième (4) disque denté, moyennant quoi l'axe de rotation (8a) de la roue dentée (5) est agencé sur le rotor (6) avec une inclinaison selon un angle (α) par rapport à l'axe longitudinal, de sorte que ladite roue dentée constitue un disque oscillant (5) et l'axe de rotation incliné (8a) un axe oscillant, les deux disques dentés (3, 4) présentant chacun un nombre de dents différent.

2. Dispositif de superposition de vitesses selon la revendication 1, **caractérisé en ce que** les cercles primitifs des dentures (16, 17) des deux disques dentés (3, 4) sont différents, **en ce que** les dentures (16, 17) sont situées sur le même plan, orientées dans la même direction l'une par rapport à l'autre et alignées au niveau de l'engrènement avec la denture du disque oscillant (5).

3. Dispositif de superposition de vitesses selon l'une quelconque des revendications précédentes, **caractérisé en ce que** l'engrènement simultanée de la denture (18) du disque denté (5) additionnel avec les dentures (16, 17) des deux disques dentés (3, 4) s'effectue du même côté et dans la même partie de la périphérie de ce disque denté (5) additionnel.

4. Dispositif de superposition de vitesses selon la revendication 2, **caractérisé en ce que** la surface des dentures (16, 17) des deux disques dentés (3, 4) est inclinée par rapport au plan orthogonal à l'axe longitudinal (8) et **en ce que** ladite surface est une aire latérale de cône dont la pointe est située sur l'axe longitudinal (8).

5. Dispositif de superposition de vitesses selon l'une quelconque des revendications précédentes, **caractérisé en ce que** l'arbre du rotor (6) présente, à l'une des extrémités du rotor, un tronçon d'arbre qui est incliné selon un angle (α) par rapport à l'axe longitudinal (8) et qui entoure l'axe oscillant (8a) et **en ce que** le disque oscillant (5) denté est agencé sur ledit tronçon de l'arbre (6).

6. Dispositif de superposition de vitesses selon l'une quelconque des revendications précédentes, **caractérisé en ce que** le premier disque denté (3) présente, par rapport au deuxième (4), un diamètre de cercle primitif plus petit et un nombre de dents inférieur.

7. Dispositif de superposition de vitesses selon l'une quelconque des revendications précédentes, **caractérisé en ce que** l'agencement qui comprend les deux disques dentés (3, 4) coopérant avec le disque oscillant présente un rapport de transmission maximum de 1:10, ce qui réduit d'autant la vitesse de rotation de l'arbre secondaire (2) par rapport à la vitesse du rotor (6).

8. Dispositif de superposition de vitesses selon l'une quelconque des revendications précédentes, **caractérisé en ce que** l'angle (α) est supérieur à 1 °, inférieur à 45° et compris, de préférence, entre 2° et 15°.

9. Dispositif de superposition de vitesses selon l'une quelconque des revendications précédentes, **caractérisé par** la présence de moyens (337) élastiques et/ou amortisseurs qui maintiennent en prise, par pré-tension, au moins l'une des dentures (16, 17, 18), afin d'assurer une compensation de jeu et/ou une atténuation de bruit.

10. Dispositif de superposition de vitesses selon l'une quelconque des revendications précédentes, **caractérisé en ce que** les fonctions d'entrainement menant-mené de l'arbre primaire (1) et de l'arbre secondaire (2) sont inversées.

11. Dispositif de superposition de vitesses selon l'une quelconque des revendications précédentes, **caractérisé en ce que** le dispositif d'entraînement auxiliaire (101) est un moteur électrique agencé à l'intérieur de l'unité de support (11) dans lequel un stator (7) associé au rotor (6) est disposé coaxialement par rapport à l'arbre primaire (1) ou à l'arbre secondaire (2), le rotor (6) étant doté, de préférence, d'aimants permanents (306) et le moteur électrique étant un moteur à commutation électronique.

12. Dispositif de superposition de vitesses selon la revendication 11, **caractérisé en ce que** ledit dispositif (100, 100') est combiné à un système (10) de freinage et/ou de verrouillage qui, en cas d'incident, a pour effet de bloquer en rotation le rotor (6) associé au stator (7) et/ou à l'unité de support (11a, 11b).

13. Dispositif de superposition de vitesses selon l'une quelconque des revendications précédentes, **caractérisé en ce que** ledit dispositif est agencé dans le système de direction (129) d'un véhicule automobile.
